# EUROPÄISCHE PATENTANMELDUNG

(11) **EP 1 705 093 A2**
(43) Veröffentlichungstag der Anmeldung: **27.09.2006**
(21) Anmeldenummer: 06111300.7
(22) Anmeldetag: 17.03.2006
(51) Int. Cl.: B61D 33/00

(54) **Fahrgastsitz**

(30) Priorität: 23.03.2005 AT 4962005
(71) Anmelder: SCHLEGEL AG, 9403 Goldach (CH)
(72) Erfinder: Wäger, Karlheinz, 9403 Goldach (CH); Schrom, Michael, 9403 Goldach (CH)
(74) Vertreter: Stocker, Kurt

(57) **Zusammenfassung**

Bei einem Fahrgastsitz (1) mit einer Sitzfläche (3) und einer Rückenlehne (2) ist eine sich über den Bereich der Sitzfläche (3) und der Rückenlehne (2) erstreckende Sitzschale (4) vorgesehen. Die Sitzschale (4) ist von wenigstens einem in Längsrichtung einstückig ausgebildeten Hohlprofil, und zwar von wenigstens zwei in Querrichtung aneinander anschliessenden Sitzschalenteilen (8, 9) gebildet.

## Beschreibung

Die Erfindung betrifft einen Fahrgastsitz mit einer Sitzfläche und einer Rückenlehne, wobei eine sich über den Bereich der Sitzfläche und der Rückenlehne erstreckende Sitzschale vorgesehen ist. Derartige Fahrgastsitze werden in den öffentlichen Nahverkehrs- und Fernverkehrsmitteln, wie Eisenbahn-, S-Bahn- und U-Bahnwagen, ebenso wie in den öffentlichen Omnibusfahrzeugen oder aber auch in Lift- und Personentransportsystemen aller Art verwendet. Die Fahrgastsitze sind dort meist einer hohen Beanspruchung durch Belastung, Verschmutzung, Verschleiss und Vandalismus unterworfen, sodass bei der Konzeption von Fahrgastsitzen auf eine entsprechende Widerstandsfähigkeit geachtet werden sollte. Neben ganz einfach ausgeführten Sitzen, welche lediglich aus einer Kunststoffsitzschale bestehen, welche die Sitzfläche und die Rückenlehne ausbildet, sind auch bequemere Modelle bekannt geworden, bei welchen zusätzlich eine Polsterung vorgesehen ist. Derartig einfach aufgebaute Fahrgastsitze sind naturgemäss kostengünstig herzustellen, sie können aber durch Verschleiss oder Vandalismus leicht beschädigt werden und entsprechen in ästhetischer Hinsicht nicht den Anforderungen der Konsumenten. Wenn derartige lediglich aus einer Sitzschale bestehende Sitze in Fahrzeugen verwendet werden sollen, müssen sie aus einem entsprechend leichten Material, wie Kunststoff, gefertigt werden, wobei eine ausreichende Stabilität in diesem Fall jedoch nicht immer gewährleistet ist.

Weiters sind Fahrgastsitze bekannt, welche zur Erfüllung erhöhter Komfortansprüche ausgelegt wurden und daher einen entsprechend komplizierten Aufbau aufweisen. So werden in Reisebussen oder Eisenbahnen in der Regel Sitze verwendet, bei denen die Rückenlehne relativ zur Sitzfläche verschwenkbar ist. Durch die Verschwenkung der

Rückenlehne bietet der Fahrgastsitz einer darauf sitzenden Person einen relativ grossen Komfort, da in der Regel eine nach hinten verschwenkte Rückenlehne eine gemütlichere Sitzstellung darstellt, als eine aufrecht gestellte Rückenlehne. Ein derartiger Fahrgastsitz ist beispielsweise aus der DE 3151259 A1 bekannt geworden und weist einen Sitzteil auf, dessen Sitzrahmen in Schieberichtung einer Bodenführung gegeneinander verschiebbar geführte Rahmenteile umfasst. Der erste Rahmenteil trägt die Sitzfläche, während der zweite Rahmenteil verschiebbar und mittels einer Sitzarretierungseinrichtung fixierbar an der Bodenführung gehalten ist. An dem Sitzteil ist abklappbar ein Lehnenteil gehalten. Der Lehnenrahmen ist hierbei über ein erstes Gelenk an einem der beiden Rahmenteile schwenkbar gelagert. Der Lehnenrahmen trägt im Abstand von der Gelenksachse des ersten Gelenks ein zweites Gelenk, über das er direkt oder indirekt mit dem jeweils anderen Rahmenteil kraftschlüssig gekuppelt ist. Die Gelenkachse des mit dem ersten Rahmenteil verbundenen Gelenks ist oberhalb der Gelenkachse des mit dem zweiten Rahmenteil verbundenen Gelenks an dem Lehnenrahmen angeordnet. Beim Vorklappen des Lehnenteils wird zugleich der Sitzteil nach vorne geschoben, wodurch bei zweitürigen Kraftfahrzeugen die Einstiegsöffnung für die hinteren Sitze vergrössert wird.

Um die Stabilität eines Fahrgastsitzes mit geringen Kosten zu sichern, wurde in der EP 0 982 180 bereits ein aus einem Hohlprofil gespritzter Kunststoffteil vorgeschlagen. Dabei wurde ein für die Fertigung von Auto-Stossstangen bekanntes Verfahren benutzt, bei dem während des Spritzens Luft in den Hohlraum eingeblasen wurde. Der aus Kunststoff bestehende und über die gesamte Breite hin hohle Körper hatte allerdings nur eine begrenzte Stabilität bzw. einen limitierten E/Modul. Eine Flexibilität bzw. Anpassbarkeit in der Fertigung war mit diesem Verfahren gar nicht möglich.

Eine Ausführung aus einem Metall, wie es in der DE-U-94 16 771 oder der WO 96/16833 bei einem völlig anderen Aufbau vorgeschlagen wird, hätte zwar den E-Modul verbessert, brachte aber ebenso wenig eine Möglichkeit, die Flexibilität bzw. Anpassbarkeit in der Fertigung für Sitze unterschiedlicher Art in Bezug auf die Sitzergonomie (Sitzlinie) als auch in der Breite zu verbessern, wie dies etwa bei Fahrzeugen mit Touristen-, Business und Erster Klasse gefordert wird.

Die vorliegende Erfindung zielt nun darauf ab, einen Fahrgastsitz bereitzustellen, welcher mit geringen Kosten herstellbar ist, gleichzeitig alle Stabilitätsanforderungen auf einfache Weise erfüllt, darüber hinaus einfach ein- bzw. auszubauen ist, gegen Vandalismus möglichst geschützt ist und zusätzlich eine Fertigung erlaubt, welche sich leicht an unterschiedliche Anforderungen anzupassen erlaubt.

Zur Lösung dieser Aufgabe zeichnet sich der der erfindungsgemäss durch die kennzeichnenden Merkmale des Anspruches 1 aus. Dadurch, dass ein in Längsrichtung einstückig ausgebildetes Hohlprofil als Sitzschale vorgesehen ist und dieses von wenigstens zwei in Querrichtung aneinander anschliessenden Sitzschalenteilen gebildet ist, wird eine selbst tragende Sitzschalenstruktur geschaffen, welche trotz geringen Gewichts äusserst stabil ist, wobei durch die minimale Anzahl an erforderlichen Teilen ein einfacher Aufbau gewährleistet ist. Dadurch, dass die Sitzschale in Längsrichtung geteilt ist, ist der Sitzflächenbereich mit dem Rückenlehnebereich starr verbunden, sodass auf offene Verschraubungen sowie überlappende oder ausragende Detailgestaltungen verzichtet werden kann und die bei der Verwendung einer mehrteiligen Sitzschale sonst auftretenden Ritzen, Simsen und dgl. vermieden werden. Dadurch werden Angriffstellen, welche zum Vandalismus verleiten könnten, weitestgehend entfernt und überdies der ästhetische Gesamteindruck verbessert. Dadurch, dass die Sitzschale nicht als Vollkörper ausgebildet ist, sondern aus einem Hohlprofil besteht, wird das Gewicht bei gleich bleibender Stabilität erheblich verringert und somit die Einsetzbarkeit in Fahrzeugen gewährleistet. Schliesslich sichert der Aufbau aus mindestens zwei in Querrichtung aneinander anschliessenden Teilen, dass sich damit automatisch an der Stossstelle eine Versteifung ergibt, also just dort, wo das Gewicht einer darauf sitzenden Person das grösste Biegemoment ausübt. Gleichzeitig wird in der Herstellung und Lagerhaltung die Anzahl der Teilevielfalt reduziert, weil etwa unterschiedliche Sitzbreiten durch Einfügen von Zwischenstücken erzielt werden können.

Die Sitzschalenteile können hierbei miteinander verschweisst, verklebt oder mit Hilfe von Nieten verbunden werden. Bevorzugt erfolgt diese Verbindung an den Stossflächen, weil sie dadurch dem Zutritt von Vandalen besser entzogen ist und überdies dem Sitz eine, mindestens nach oben hin glatte Fläche bietet.

Als Material für die Sitzschale kommen prinzipiell metallische und nichtmetallische Werkstoffe in Frage. Bevorzugt ist hierbei vorgesehen, dass das Material der Sitzschale ein Elastizitätsmodul von wenigstens 50.000 N/mm2 aufweist. In diesem Zusammenhang ist die Verwendung von Aluminium besonders bevorzugt, da eine Gewichtsreduktion bei, gleich bleibender Stabilität gewährleistet wird, wobei hier insbesondere stranggezogene Aluminiumprofile eingesetzt werden können. Ebenso könnte jedoch auch ein Duroplast als Material für die Sitzschale verwendet werden. Die Verwendung von Aluminium hat jedoch den Vorteil, dass eine besonders robuste Oberfläche geschaffen wird, welche dem Vandalismus entgegen wirkt. Bei Verwendung von eloxiertem Aluminium ist es beispielsweise durch Einsatz von entsprechenden lösungsmittelhaltigen Reinigungsmitteln möglich, die von Vandalen in öffentlichen Transportmitteln häufig zu beobachtende Beschmierung leicht wieder abzuwaschen.

Wie bereits erwähnt, ist die erfindungsgemässe Sitzschale in Längsrichtung einstückig ausgebildet, d.h. dass das zum Einsatz gelangende Hohlprofil vom obersten Bereich der Rückenlehne, an welchem üblicher Weise der Nacken oder der Kopf anliegt, bis zum freien Ende der Sitzfläche, d.h. dort wo üblicher Weise die Kniekehle des Fahrgastes zu liegen kommt, durchgehend und ohne Unterbrechungen ausgeführt ist.

Der Profilquerschnitt des zum Einsatz gelangenden Hohlprofils kann zur Erhöhung der Stabilität an der der Sitzfläche bzw. der Rückenlehne abgewandten Seite bogenförmig ausgebildet sein, wobei an der gegenüberliegenden Seite, d.h. an der die Sitzfläche oder die Rückenlehne ausbildenden Seite, das Profil gerade ausgebildet sein, kann. Alternativ kann jedoch hier auch eine Anpassung an ergonomische Bedürfnisse erfolgen bzw. eine der auf der Sitzschale anzubringenden Bepolsterung angepasste Form gewählt werden. Zur Erleichterung der Aufbringung der Polsterung ist bevorzugt vorgesehen, dass die Sitzschale bzw. die Sitzschalenteile und eine auf die Sitzschale aufzubringende Polsterung miteinander zusammenwirkende Verbindungsglieder tragen. Die Verbindungslieder können hierbei mit Vorteil von wenigstens einer in Längsrichtung verlaufenden hinterschnittenen Nut und dem Querschnitt der Nut entsprechenden Gegengliedern gebildet sein. Besonders bevorzugt ist hierbei eine sogenannte Kederverbindung.

Die Erfindung wird nachfolgend anhand eines in der Zeichnung dargestellten Ausführungsbeispiels näher erläutert.
Fig.1 zeigt eine Seitenansicht des erfindungsgemässen Fahrgastsitzes;
Fig.2 eine abgewandelte Ausbildung des Sitzes;
Fig.3 eine auseinander gezogene Darstellung der Einzelteile des Fahrgastsitzes;
Fig.4 eine Darstellung der Sitzschale;
Fig.5 einen Querschnitt durch die Rückenlehne des Fahrgastsitzes; und
Fig.6 verschiedene Ausgestaltungen der Sitzschale zur Ausbildung verschiedener Sitzbreiten und Profilformen.

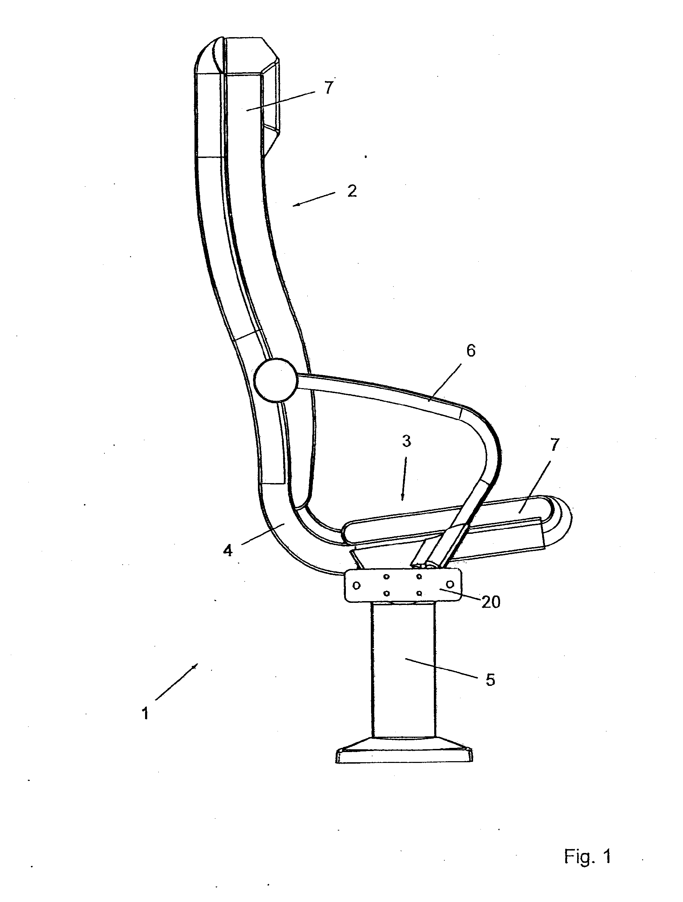

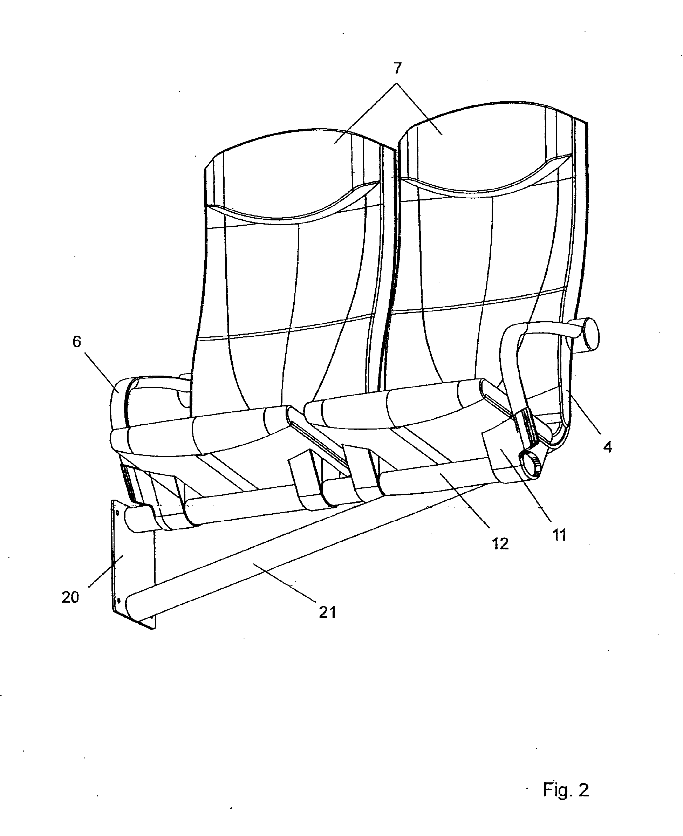

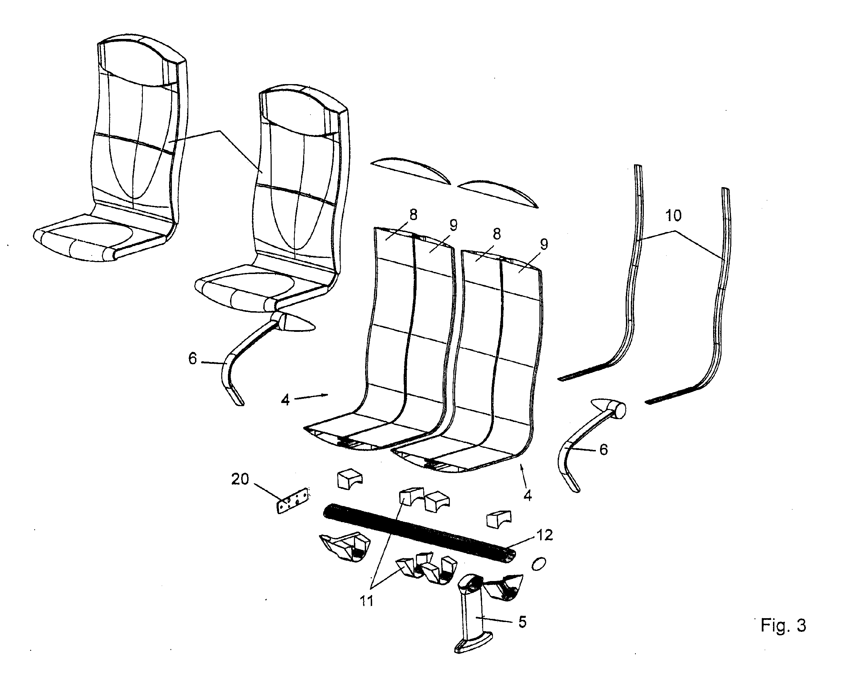

In Fig.1 ist ein Fahrgastsitz 1 mit einer Rückenlehne 2 und einer Sitzfläche 3 dargestellt. Die Sitzschale ist mit 4 bezeichnet und ist mit einem Sitzfuss 5 verbunden, wobei die Wandanbindung mit Hilfe des Teils 20 erfolgt. Weiters ist eine Armlehne 6 ersichtlich. Die Sitzschale 4 trägt eine Polsterung 7. Anstelle des Sitzfusses 5 kann auch eine Querstrebe bzw. ein Kantilever 21 Verwendung finden, wie dies in Fig.2 dargestellt ist. Der genaue Aufbau des Fahrgastsitzes ist aus Fig.3 deutlicher ersichtlich, wobei eine Doppelsitzgarnitur dargestellt ist, auf welcher zwei Fahrgäste Platz nehmen können. Die selbst tragende Sitzschalenstruktur wird von der Sitzschale 4 gebildet, welche aus jeweils zwei in Querrichtung aneinander grenzenden Sitzschalenteilen 8 und 9 besteht. Zur Erhöhung des Komforts sind die Sitzschalen 4 jeweils mit einer Polsterung 7 versehen, wobei der seitliche Abschluss jeweils von einer Abschlussleiste 10 gebildet wird. Die Sitzschale 4 wird mittels Klemmschellen 11 auf einem zentralen Tragrohr 12 befestigt, welches wiederum mit dem Sitzfuss 5 verbunden ist. Wenn der Sitzfuss, wie in Fig.2 dargestellt, aussermittig angeordnet ist, erfolgt üblicher Weise weitere Abstützung des Tragrohrs mit Hilfe einer Wandanbindung 20 an einer nicht näher dargestellten Wand.

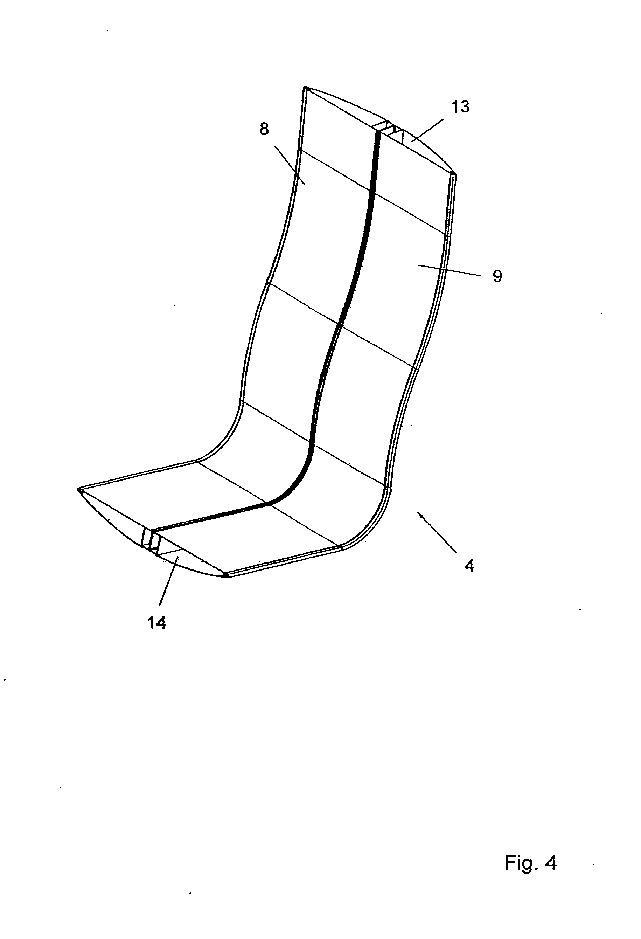

In Fig.4 ist die aus den Sitzschalenteilen 8 und 9 bestehende Sitzschale 4 vergrössert dargestellt, wobei ersichtlich ist, dass die Sitzschalenteile 8 und 9 jeweils von einem Hohlprofil gebildet sind, welches in Längsrichtung einstückig ausgebildet ist. Das Hohlprofil erstreckt sich somit vom Kopfende 13 bis zum Sitzende 14.

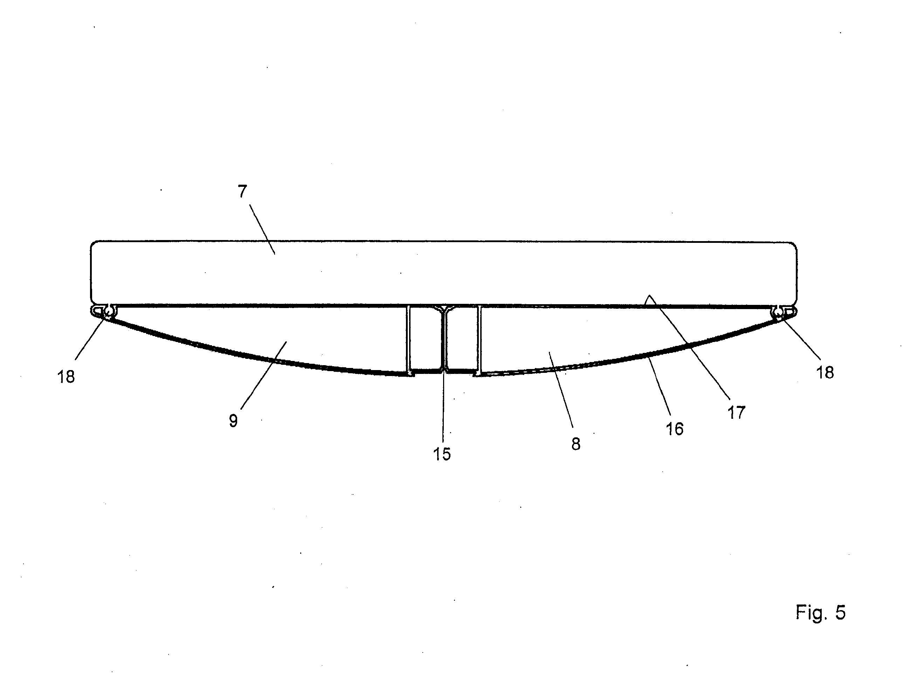

Fig. 5 zeigt eine Schnittansicht des Profils, auf welche ein Polster 7 aufgebracht ist. Die Profilteile 8 bzw. 9 sind an der Stossstelle 15 durch Verschweissung, Verschraubung, Verklemmung, Verklebung oder mit Hilfe von Nieten miteinander verbunden. Die Profilteile 8 und 9 sind an ihrer der Polsterung 7 ab gewandten Seite 16 bogenförmig ausgebildet, wohingegen an der dem Polster 7 zugewandten Seite 17 eine gerade Ausführung gewählt wurde. Zur Befestigung des Polsters 7 sind die Profilteile 8 und 9 jeweils mit einer Nut bzw. einem Keder 18 ausgebildet, in welche(s) entsprechende Verriegelungsglieder des Polsters 7 eingeführt oder verrastet sind.

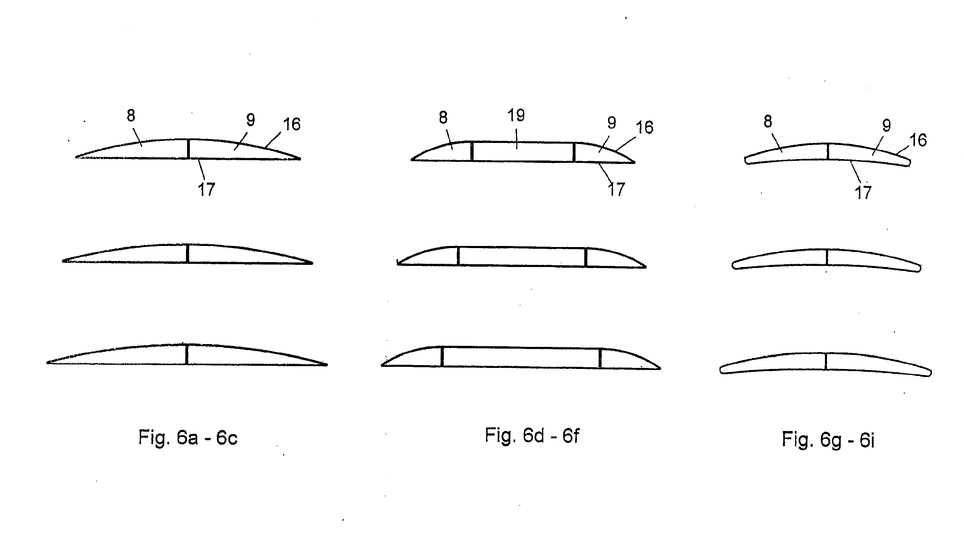

Zur Ausbildung verschiedener Sitzbreiten können verschiedene Sitzschalenteile kombiniert werden, wie dies in aus Fig. 6 ersichtlich ist. In den Fig. 6a bis c sind jeweils zwei Sitzschalenteile aneinander gefügt, wohingegen in der Ausbildung gemäss den Fig. 6d bis f jeweils drei Sitzschalenteile aneinander gefügt sind. Um die Teilevielfalt in Grenzen zu halten, wurden bei der Darstellung gemäss den Fig. 6d bis f jeweils gleichartige Endteile 8 und 9 zur Anpassung an die jeweils gewünschte Sitzbreite mit einem unterschiedlich breit ausgestalteten Zwischenteil 19 verbunden. weitere Profilformen der Sitzschale 4 sind in Fig.6h - i dargestellt, wobei hier die Seite 17 des Profils genauso wie die Seite 16 bogenförmig ausgebildet ist.

Insgesamt zeichnet sich der erfindungsgemässe Fahrgastsitz durch eine sehr einfache und gleichzeitig überaus stabile Konstruktion aus, welche mit einer geringen Anzahl unterschiedlicher Teile auskommt. Es ist eine Vielzahl von Sitzvariationen möglich, ohne dabei das Werkzeugbudget negativ zu beeinflussen, sodass die Logistikaufwendungen gering gehalten werden können. Bei Verwendung von unproblematischen Materialien können reinigungs- und pflegefreundliche Sitzkonzepte erstellt werden, wobei die Montage und Demontage von Anbauteilen überaus einfach durch entsprechende Schnittstellenstrukturen möglich ist. Der Einsatz von robusten Materialien und Oberflächen wirkt dem Vandalismus entgegen, wobei insbesondere durch den Verzicht auf offene Verschraubungen sowie überlappende und ausragende Teile ein klares Design geschaffen wird.

## Patentansprüche

1. Fahrgastsitz mit einer Sitzfläche und einer Rückenlehne, wobei eine sich über den Bereich der Sitzfläche und der Rückenlehne erstreckende Sitzschale vorgesehen ist, die von wenigstens einem in Längsrichtung einstückig ausgebildeten Hohlprofil gebildet ist, **dadurch gekennzeichnet, dass** die Sitzschale (4) von wenigstens zwei in Querrichtung aneinander anschliessenden Sitzschalenteilen (8, 9) gebildet ist.

2. Fahrgastsitz nach Anspruch 1, **dadurch gekennzeichnet, dass** das Material der Sitzschale (4) ein Elastizitäts-Modul von wenigstens 50 000 N/mm² aufweist.

3. Fahrgastsitz nach Anspruch 1 oder 2, **dadurch gekennzeichnet, dass** die Sitzschale (4) aus einem metallischen Werkstoff, vorzugsweise Aluminium, besteht.

4. Fahrgastsitz nach einem der vorhergehenden Ansprüche, **dadurch gekennzeichnet, dass** die Sitzschalenteile (8, 9) an der Stossfläche miteinander verbunden sind.

5. Fahrgastsitz nach einem der vorhergehenden Ansprüche, **dadurch gekennzeichnet, dass** der Profilquerschnitt an der der Sitzfläche (3) bzw. der Rückenlehne (2) abgewandten Seite bogenförmig ausgebildet ist.

6. Fahrgastsitz nach einem der vorhergehenden Ansprüche, **dadurch gekennzeichnet, dass** die Sitzschale (4) bzw. die Sitzschalenteile und (8, 9) eine auf die Sitzschale aufzubringende Polsterung (7) miteinander zusammenwirkende Verbindungsglieder tragen.

7. Fahrgastsitz nach Anspruch 6, **dadurch gekennzeichnet, dass** die Verbindungs-glieder von wenigstens einer in Längsrichtung verlaufenden hinterschnittenen Nut (18) und dem Querschnitt der Nut entsprechenden Gegengliedern gebildet sind.
